Europäisches Patentamt

**European Patent Office**

Office européen des brevets

(11) Publication number: **0 069 402**
**B1**

(12) **EUROPEAN PATENT SPECIFICATION**

(45) Date of publication of patent specification: 07.08.85

(21) Application number: **82106346.8**

(22) Date of filing: **16.04.80**

(60) Publication number of the earlier application in accordance with Art. 76 EPC: **0 018 747**

(51) Int. Cl.⁴: **G 01 M 17/02**, G 01 N 29/00, B 29 D 30/52

(54) Apparatus for buffing and non-destructive testing of tyres.

(30) Priority: **19.04.79 US 31961**
**19.04.79 US 31962**
**19.04.79 US 31963**

(43) Date of publication of application:
**12.01.83 Bulletin 83/02**

(45) Publication of the grant of the patent:
**07.08.85 Bulletin 85/32**

(84) Designated Contracting States:
**AT BE CH DE FR GB IT LI LU NL SE**

(56) References cited:
**GB-A-1 385 738**
**US-A-3 877 506**
**US-A-3 882 717**
**US-A-3 948 094**

(73) Proprietor: **BANDAG, INCORPORATED**
**Bandag Center**
**Muscatine, Iowa 52761 (US)**

(72) Inventor: **Dugger, Doyle Lawrence**
**Rural Route 6 Box 103A**
**Muscatine Iowa (US)**

(74) Representative: **Smith, Norman Ian et al**
**F.J. CLEVELAND & COMPANY 40-43 Chancery Lane**
**London WC2A 1JQ (GB)**

Courier Press, Leamington Spa, England.

## Description

This invention is generally directed to methods and apparatus for the buffing and non-destructive testing of rubber tyres.

There has long been an urgent need for cost effective, efficient, non-destructive inspection (NDI) of rubber tyre casings. There are obvious safety benefits to be had by such techniques if they can be efficiently and rapidly practiced. There are also potential economic benefits. For example, during tyre retreading operations, a defective tyre carcass can be discarded before wasting further expenditures of time and money if it can be accurately, efficiently and quickly detected.

In fact, the need for improved NDI methods and apparatus relating to the testing of tyre casings is so great that the U.S. Army Materials and Mechanics Research Center has sponsored special symposia devoted entirely to this subject in 1973, 1974, 1976 and 1978. The proceedings of the first three of these symposia have now been published and are available from the U.S. National Technical Information Service. They each include a complete chapter on ultrasonic tyre testing as well as other chapters devoted to different tyre testing procedures (e.g. holographic, infrared and X-ray). There are also many prior art patents relating generally to the use of ultrasonic waves to non-destructively test pneumatic tyre casings. For example:

U.S. Patent No. 2,345,679—Linse (1944)
U.S. Patent No. 2,378,237—Morris (1945)
U.S. Patent No. 3,336,794—Wysoczanski et al (1967)
U.S. Patent No. 3,604,249—Wilson (1971)
U.S. Patent No. 3,815,407—Lavery (1974)
U.S. Patent No. 4,059,989—Halsey (1977)

There are also several prior art patents relating to mechanical structures for chucking or otherwise physically handling pneumatic tyre casings during various types of non-destructive testing or manufacturing processes. For example:

U.S. Patent No. 2,695,520—Karsai (1954)
U.S. Patent No. 3,550,443—Sherkin (1970)
U.S. Patent No. 3,948,094—Honlinter (1976)
U.S. Patent No. 4,023,407—Vanderzee (1977)

U.S. Patent Specification No. 3,882,717 describes another example of a known ultrasonic inspection device and U.K. Patent Specification No. 1 385 738 describes an X-ray inspection device.

An example of a known tyre buffing device is described in U.S. Patent Specification No. 3,877,506.

Although a wide variety of non-destructive ultrasonic tests have been performed on tyres in the past as shown by these prior art patents, they have each suffered serious deficiencies and have failed to achieve widespread acceptance in commercial practice. Some of the prior art approaches have required a liquid coupling medium on one or both sides of the tyre wall under test. Some prior testing procedures use a so-called "pulse-echo" approach which gives rise to a rather complex pattern of echoes due to normal internal tyre structures as well as for abnormal structures. Many have used relatively low frequencies (e.g. 25 kHz) with resulting severe interference from normal ambient acoustic sources while others have used extremely high frequencies (e.g. 2 MHz) with resulting rapid signal attenuation. Some have used continuous ultrasonic waves resulting in a confusing pattern of standing waves and the like while others have looked for envelope peaks in the received acoustic waves. Others have used individual pulses of acoustic signals for each tyre testing site. In some cases the peak received envelope magnitude has been used to reach final data values. Some have also attempted to test an inflated tyre carcass (but sometimes causing the acoustic signals to pass through two tyres walls so as to keep all transducers external to the tyre) although most have attempted to test a non-inflated tyre carcass. There may have been other techniques as well.

Prior tyre chucking mechanisms in general have included axially movable tyre mounting rims for quickly mounting and inflating a test tyre. Prior NDI machines have located an ultrasonic transmitter inside a rotatable inflated tyre, albeit such have been only fixed or manually adjustable mounting arrangements. Other NDI machines have included articulated transmitter mounting arrangement in conjunction with a spread-open non-inflated test tyre. However, there has not yet been a commercially viable mechanical arrangement for quickly positioning ultrasonic transducers about an inflated test tyre wall while at the same time facilitating quick tyre mounting/demounting procedures and also protecting the transducers from physical harm.

It has now been discovered that these earlier attempts at ultrasonic non-destructive inspection of tyre casings can be considerably improved and made more commercially viable.

According to one aspect of the present invention there is provided apparatus for buffing and for non-destructively testing a buffed tyre carcass, said apparatus being characterised by opposed circular rings for sealingly engaging the corresponding rims of said tyre, tyre inflation means which inflate said tyre after engagement by said rings, buffing means for rotating said inflated tyre and for buffing away the outer tread wall surfaces to provide a substantially uniform outside tread wall surface on the resulting tyre carcass, ultrasonic testing means disposed both inside and outside the inflated tyre for measuring the relative strengths of ultrasonic acoustic signals transmitted through different areas of said buffed tread wall as it is rotated thereby non-destructively testing the buffed tyre carcass.

According to another aspect of the present invention there is provided a method for buffing and for non-destructively testing a buffed tyre carcass, said method being characterised by using one unified apparatus for sealingly engaging the rims of said tyre between opposing rings, inflating said tyre after engagement by said rings, rotating said inflated tyre and buffing away the outer tread wall surfaces to provide a substantially uniform outside tread wall surface on the resulting tyre carcass, and measuring the relative strengths of ultrasonic acoustic signals transmitted through different areas of said buffed tread wall while it is still inflated and as it is rotated thereby non-destructively testing the buffed tyre carcass.

In the presently preferred embodiment, plural transmitting acoustic transducers are located inside a revolving inflated tyre so as to acoustically illuminate the entire inside tyre surfaces under test. However, it has been discovered that peculiar wave cancellation, standing wave patterns or similar wave effects may distort readings if more than one transmitter is activated at a given time. Accordingly, the preferred embodiment includes multiplexing circuitry to insure that only a single transducer is activated at a given time. Apparatus incorporating multiplexing means is described and claimed in EP Patent Specification No. 59961.

Plural acoustic receiving transducers are arrayed about the outer tyre walls so as to receive acoustic signals transmitted therethrough from the transmitting transducers located inside the tyre. Each receiving transducer is preferably collimated and matched to the ambient air impedance with a cylindrical tube having an inner conical surface which tapers down to the sensing area of the actual receiving transducer. Such collimation helps to confine each receiver's output to represent acoustic signals transmitted through a limited area of the tyre wall and further helps to reject interference from tread patterns and ambient noise. Flaws in the tyres such as separations between cord layers and rubber layers or between various rubber layers attenuate the acoustic signals passing therethrough to a greater extent than when the acoustic signals pass through a normal section of the tyre wall.

The averaging of data taken at different frequencies may further enhance the results. Apparatus incorporating circuits for different frequencies is described and claimed in EP Patent Specification No. 60469.

The use of an inflated tyre in the preferred embodiment has been discovered to assist in maintaining a true running tyre surface and thus avoids signal variations that might otherwise be caused by wobbling or other relative axial motions of the tyre walls during rotation. The inflated tyre is also useful in helping to at least partially stress the tyre walls, as they will be stressed during normal use, and to open up leakage passageways through the tyre walls so that they may be detected by ultrasonic detection of air passing therethrough. Approximately only 0.345 bar is needed to maintain a stable inflated tyre structure. However, it has been discovered that improved signal transmission and overall performance occurs if the tyre is inflated within the range of approximately 1.034—1.241 bar.

The preferred exemplary embodiment of this invention also includes special mechanical features for automatically moving the acoustic transducers into and out of operative position with respect to the inflated tyre walls. During tyre mounting and demounting operations, the acoustic transmitters are retracted inwardly both radially and axially with respect to at least one tyre mounting ring or flange so as both to facilitate the tyre mounting and demounting operations and to protect the acoustic transmitters from possible physical damage. During or after tyre inflation, these acoustic transmitters are moved radially outwardly inside the inflated tyre into an operative position with respect to the inside tyre walls. At the same time, the array of acoustic receivers is moved radially inwardly towards the outer inflated tyre walls to a desired operative position. Apparatus incorporating adjustable transmitter mounting means is described and claimed in EP Patent Specification No. 60470.

In the preferred exemplary embodiment, the relative axial movement of the acoustic transmitters with respect to a tyre mounting flange or ring is achieved by spring loading the tyre ring so that it axially moves away from the acoustic transmitters thereby uncovering them during the tyre mounting operation and thus providing proper clearance for subsequent radially outward movement into the inflated tyre carcass. Such spring loading also helps in properly seating the tyre rims with the mounting flanges or rings during mounting and inflation operations.

The ultrasonic bursts and receiver gating periods are preferably synchronized to occur at corresponding successive incremental positions of the rotating tyre such that the final display or defect indication may be accurately located with respect to an index mark on the tyre and/or tyre mounting flange or the like.

Reference is made to EP Patent Specification Nos. 61045 and 18747 which also describe and claim tyre inspection apparatus.

These and other objects and advantages of this invention will be better appreciated by reading the following detailed description of the presently preferred exemplary embodiment in conjunction with the accompanying drawings, of which:

Figures 1 and 2 are perspective views of a combined NDI/buffer machine;

Figure 3 is a block diagram of the combination shown in Figures 1 and 2;

Figure 4 is a schematic showing of a tyre wall section with acoustic transmitters and receivers and of pre-amplifier and multiplexing circuitry;

Figure 5 is a cross-sectional view of a collimator/impedance matching device used in each of the receiving transducers, and

Figure 6 is a detailed cut-away view of the fixed spindle and transmitter mounting arrangement of the embodiment shown in Figures 1 and 2.

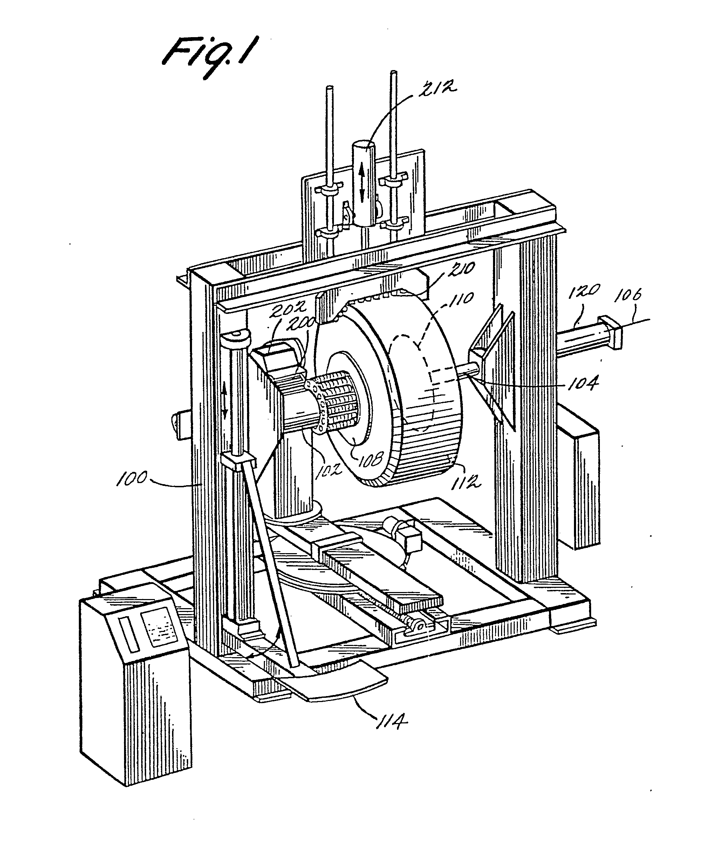

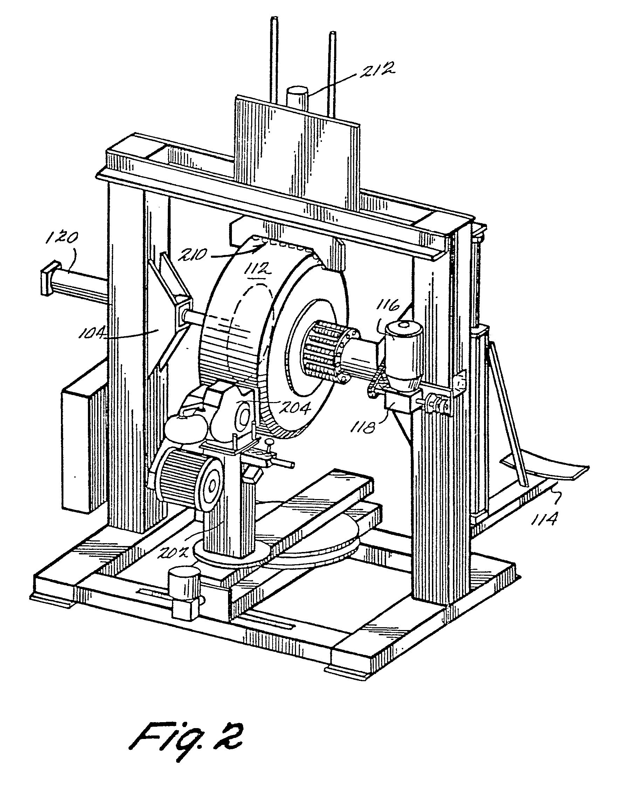

Referring to Figures 1 and 2, two perspective views of the presently preferred exemplary combined tire buffer and NDI machine are shown.

The major mechanical components of the machine are mounted to an open frame 100 having a fixed spindle 102 and an axially movable spindle 104 opposingly aligned along horizontal axis 106. Conventional circular tyre mounting rings or flanges 108 and 110 are attached to the outer rotatable ends of spindles 102 and 104 for mounting an inflated tyre 112, therebetween. A conventional pneumatically operated tyre lift mechanism 114 is conveniently provided so as to assist the human operator in lifting and swinging a tyre into and out of place between rings 108 and 110 during tyre mounting and demounting operations.

Ring 108, and hence tyre 112, is driven by a two horsepower d.c. motor 116 through reducing gears 118. A tyre surface speed of approximately 189.2 metres per minute is preferred for buffing operations while a much lower speed of approximately 12.2 metres per minute is preferred for NDI operations. Spindle 104, and hence ring 110, is axially extended and retracted by pneumatic cylinder 120. During tyre mounting operations, ring 110 is retracted by cylinder 120 so as to permit the tyre 112 to be lifted into place on ring 108 by lift 114. Thereafter, ring 110 is extended against the corresponding rim of tyre 112 and the tyre is inflated to a desired set point pressure by compressed air passed through the centre of spindle 102.

A conventional rotating tyre buffing rasp 200 is mounted on a vertical pedestal 202 situated on the backside of the machine as seen in Figure 2. The rasp 200 is controlled via a conventional panel 204 to move laterally along a desired buffing path and horizontally towards and away from the tyre by conventional control mechanisms including a "joy stick" used to control a pneumatic cylinder, lead screws and associated drive motors and the like. The buffer rasp 200 is rotated by a separate motor mounted on pedestal 202. The buffer mechanism, *per se,* is of a conventional type as marketed by Bandag, Inc., e.g. Buffer Model No. 23A.

An array of 16 ultrasonic acoustic receiving transducers 210 is disposed above and around the outer walls of tyre 112. The receivers 210 preferably include a conically shaped collimator and/or focusing tube to help limit the field of view for each individual transducer to a relatively small and unique area across the tyre wall. The receivers 210 may be conveniently potted either individually or in groups in polyurethane foam or the like to help mechanically fix the receivers in their respective desired positions, to help protect the receivers and to help isolate the receivers from spurious ambient acoustic signals. The array of receivers 210 is radially adjusted into operative position by an air cylinder 212 having a coupled hydraulic control cylinder so as to define a radially extended operative position for the receivers 210.

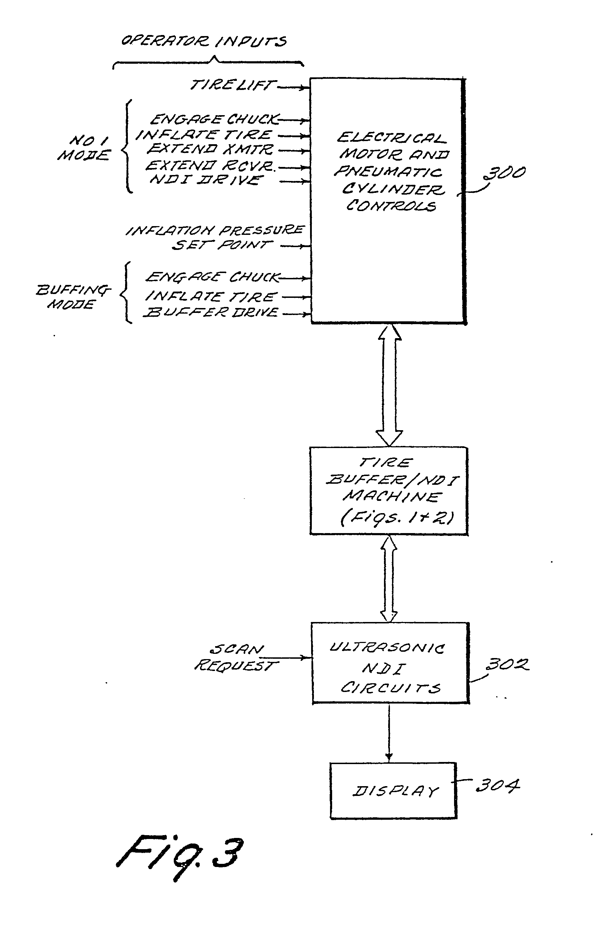

A block diagram of the combined tyre buffer/ NDI machine and its associated electrical and pneumatic circuits is shown in Figure 3. The electrical motor and pneumatic cylinder controls 300 are of entirely conventional design and thus not shown in detail. Operator inputs depicted at the left of Figure 3 are made directly or indirectly by the operator via conventional electrical switches, relays, air valves and/or liquid control valves.

In operation, a tyre is placed on lift 114 and raised into position between the rings 108 and 110. Preferably, a predetermined index position on the tyre is aligned with a physical index position on flange 108. Thereafter, the chucking apparatus is engaged by causing flange 110 to move into the tyre 112 so as to pinch the tyre beads together in preparation for tyre inflation. The tyre is then inflated to a desired set point pressure. As will be explained in more detail below, the flange 108 is spring-loaded such that during chuck engagement and tyre inflation, it is caused to move axially outwardly against the spring-loading (e.g. by approximately 5.1 centimetres). This facilitates the tyre inflation process and simultaneously uncovers an ultrasonic transmitter located within the tyre from a relatively protected position so that it may subsequently be extended into an operative position under the array of receivers 210. An interlock switch activated by air pressure and/or by the physical movement of flange 108 may be used to prevent any premature extension of the transmitter before it is uncovered from its protected position.

In the buffing mode, the transmitter need not be extended. The buffing rasp drive motors are conventionally activated and controlled (e.g. with a "joy stick" and conventional push button controls) to buff the tyre tread surface as desired. Although it may be not required, it is presently preferred to have the tyre buffed to a substantially uniform outer treadwall surface before NDI operations are performed. Such buffing is believed to avoid possible spurious indications of defects caused by normal tread patterns and/or by uneven wear about the tyre surface.

When the operator selects the NDI mode of operation, an ultrasonic transmitter located inside the inflated tyre 112 is extended into operative position and the array of receivers 210 is lowered into operative position by respectively associated pneumatic cylinders. The same 2-horsepower d.c. motor which drives the tyre at approximately 182.9 surface metres per minute during buffing operations may be reduced in speed by conventional electrical circuits so as to drive the tyre at approximately 12.2 surface metres per minute during the NDI mode. After the tyre motion has reached a steady state, the operator may activate the scan request input switch to the ultrasonic NDI circuits 302. Thereafter the walls of tyre 112 will be ultrasonically inspected during one or more complete tyre revolutions to produce a display 304 which can be humanly interpreted directly or indirectly to reveal the condition of the tyre (e.g. satisfactory for further buffing and retreading, doubtful or unsatisfactory). If questionable condition is indicated, the tyre may be discarded or may be additionally buffed and retested.

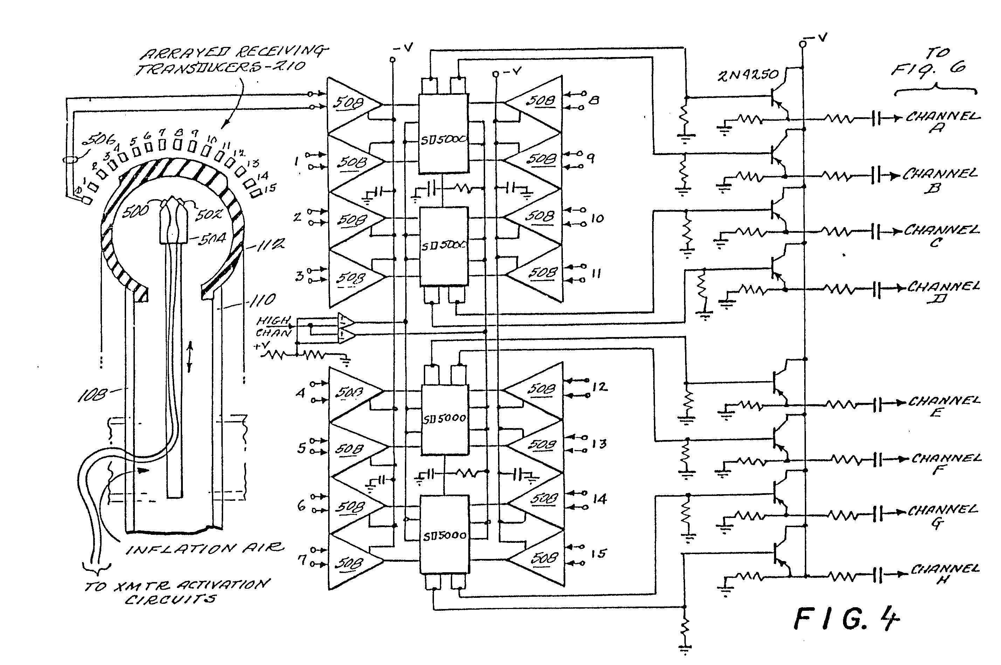

As shown in Figure 4 ultrasonic acoustic transmitting crystals 500 and 502 are disposed inside inflated tyre 112, which is chucked between rings 108 and 110, rotatably secured to spindles 102 and 104, respectively. The electrical leads feeding transmitters 500 and 502 are fed out through the fixed spindle 102 to the transmitter activation circuits. Inflation air is likewise fed in through the centre of spindle 102 as are pneumatic lines and/or other control connections for extending and retracting the transmitters.

The exemplary ultrasonic transmitters 500 and 502 have a radiation field which substantially illuminates a sector of approximately 90°. Hence, they are mounted at 90° with respect to one another on block 504 which may, for example, be formed from polyvinyl chloride plastic materials. It has been found that acceptable operation will not result if the transmitters are too close to the inside tyre surfaces or too far away from these surfaces. In the preferred exemplary embodiment, transmitting crystals 500 and 502 are approximately 5.1 centimetres from the inner tyre wall surfaces although this optimum distance of separation may be varied by a considerable amount (e.g. plus or minus approximately 2.5 centimetres).

The arrayed receiving transducers 210 are

| | |
|---|---|
| Frequency of Maximum Impedance (fm) | 75 kHz±3 kHz |
| Impedance at fm (min) | 6K |
| Receiving Sensitivity (O.C.) at Frequency of Max Output dB re 1 Volt/microbar | −70 dB Min. |
| Transmitting Sensitivity dB re 1 microbar at 0.3 m./10 mw | −12 dB Min. |
| Maximum Power Input | 100 mw |
| Directivity | −10 dB Max. at 90° Total Angle |
| Temperature Stability | 10% Change in Frequency−34.4°C to +65.5°C |
| Capacitance | 120±20% pF |

A suitable transmitting crystal tuned to approximately 75 kHz is available from Ametek/Straza, California under No. 8-6A016853.

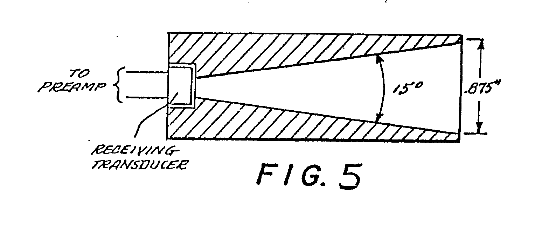

The electrical leads from each of the transducers 210 are preferably connected through coaxial cables 506 to their respectively associated pre-amplifiers 508. The outputs from each of the 16 amplifiers 508 are connected to an eight pole double throw electronic switch comprising Signetics SD5000 integrated circuits, controlled by the HIGH CHAN multiplexing signal provided by system interface 416. The eight resulting multiplexed output channels are connected

located about an arc generally corresponding to the outside shape of the tyre wall. Here again, it has been found that acceptable operation does not result if the receivers are too close or too far away from the outer tyre walls. Preferably, the receivers are no closer than approximately 2.5 centimetres to the outer tyre surface but are preferably within 14.0 to 21.6 centimetres of the opposingly situated transmitting crystal. The receiving transducers 210 preferably each employ a conically shaped collimator and/or focusing tube as shown in detail at Figure 5. These tubes are preferably machined from polyvinyl chloride plastic material and also help to match the impedance of the actual transducer crystal surface to the surrounding ambient air acoustic impedance.

A moderately high ultrasonic frequency is employed so as to help avoid interference from spurious ambient acoustic signals and to obtain increased resolution by using shorter wavelength acoustic signals while at the same time avoiding ultra-high frequency acoustic signals and the problems associated therewith. Frequencies above 40 kHz are desirable with 75 kHz being chosen as the presently preferred optimum frequency. Ultrasonic transducing crystals operating at 75 kHz are conventionally available. For example, receiving crystals are available as the MK-111 transducer from Massa Corporation, Windom, Massachusetts, having the following specifications:

through transistor buffer amplifiers to signal processing channels A—H. Accordingly, in the absence of a HIGH CHAN multiplex signal, the outputs from the first eight pre-amplifiers 508 are coupled to respectively corresponding signal processing channels A—H. However, when the HIGH CHAN multiplexing signal is present, the outputs from the last eight of the pre-amplifiers 508 are connected to respectively corresponding signal processing channels A—H.

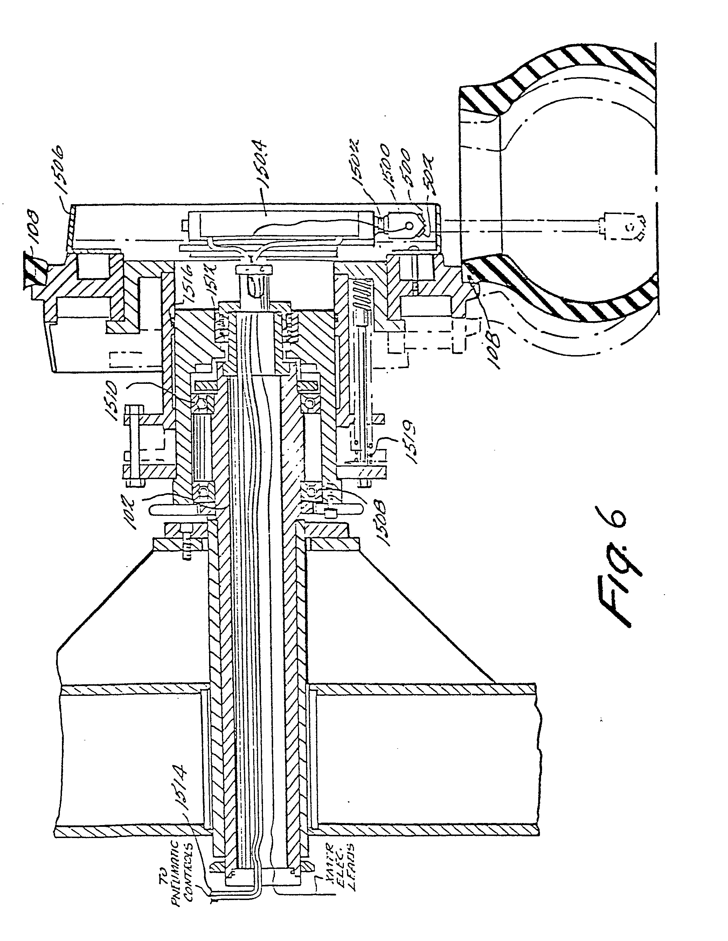

Greater detail of the fixed spindle 102 and of the associated transmitter mounting arrangement is shown in the cross-section of Figure 6. The transmitting crystals 500 and 502 are directed at 90° with respect to one another from the face of a PVC mounting block 1500. The block 1500 is, in turn, attached to a retractable rod 1502 connected to the piston of a pneumatic cylinder 1504.

As shown in Figure 6 the pneumatic cylinder 1504 has retracted the transmitting crystals 500 and 502 into a protected area defined by an annular plate 1506 attached to the tyre mounting ring or flange 108. The tyre mounting ring 108 is rotatably secured to the fixed spindle 102 through ball-bearing assemblies 1508 and 1510. This rotatable connection is maintained airtight by rotating seal assembly 1512. The centre of the spindle 102 is hollow so as to permit passage of pneumatic control line 1514 and of the transmitter electrical leads therethrough.

The rotating ring 108 and its connected assembly is spring-loaded via spring 1519 to its axially extended position as shown in Figure 6. However, the ring 108 may be moved axially to the position shown in dotted lines against the spring force. In the preferred exemplary embodiment, such motion begins to occur when the ring 108 has approximately 679 kg (0.138 bar) of lateral force applied thereto. The sliding joint which permits such motion is also maintained airtight by "O" ring 1516. In the exemplary embodiment no more than approximately two inches of axial movement are permitted before the spring force is sufficient to resist further movement even when the tyre is inflated to approximately 1.034—1.241 bar.

When the ring 108 is axially moved to the left as shown by dotted lines in Figure 6 against the force of spring 1519, transmitters 500 and 502 are then exposed and the pneumatic cylinder 1504 can be activated to extend the transmitter into the position shown by dotted lines in Figure 6 for an operative measurement cycle. Suitable interlocking switches activated by the internal pressure of the inflated tyre and/or by the physical axial position of ring 108 can be employed to insure that pneumatic cylinder 1504 is not erroneously extended and damaged while the transmitters 500 and 502 are still enclosed and protected by the flange 1506.

## Claims

1. Apparatus for buffing and for non-destructively testing a buffed tyre carcass, said apparatus being characterised by opposed circular rings (108, 110) for sealingly engaging the corresponding rims of said tyre, tyre inflation means (102) which inflate said tyre after engagement by said rings, buffing means (200) for rotating said inflated tyre and for buffing away the outer tread wall surfaces to provide a substantially uniform outside tread wall surface on the resulting tyre carcass, ultrasonic testing means (210, 500, 502) disposed both inside and outside the inflated tyre (112) for measuring the relative strengths of ultrasonic acoustic signals transmitted through different areas of said buffed tread wall as it is rotated thereby non-destructively testing the buffed tyre carcass.

2. Apparatus as claimed in claim 1 characterised in that said ultrasonic testing means comprises at least one ultrasonic acoustic transmitter (500, 502) and adjustable transmitter mounting means (1504, 1502, 1500) mechanically mounted between said rings for retracting said transmitter radially toward the centre of the circular rings while mounting and demounting the tyre from between said rings and for extending said transmitter radially away from the centre of the circular rings and toward the tyre tread wall during testing.

3. Apparatus as claimed in claim 2 characterised in that said adjustable transmitter mounting means (1504, 1502, 1500) is when in its radially retracted position, also moved axially with respect to at least one of said rings (108, 110) so as to facilitate the tyre mounting operation without damage to said transmitter.

4. Apparatus as claimed in any preceding claim further comprising a plurality of ultrasonic acoustic receivers (210) relatively disposed in an array generally conforming to the outside cross-sectional shape of said tyre (112) and adjustable receiver mounting means (212) disposed for automatic retraction of said receivers radially away from said circular rings while mounting and demounting the tyre from between the rings and for extending said receiver radially toward said circular rings during a measurement cycle.

5. Apparatus as claimed in any preceding claim characterised in that during testing, said transmitter is disposed at approximately 5.2±2.5 cms from the inside tire wall surface and said receiver is disposed at approximately 11.4 to 21.6 cms from said transmitter.

6. Apparatus as claimed in any preceding claim characterised in that said tyre inflation means inflates said tyre to a pressure of approximately 1.034 to 1.241 bar.

7. A method for buffing and for non-destructively testing a buffed tyre carcass, said method being characterised by using one unified apparatus for sealingly engaging the rims of said tyre (112) between opposing rings (108, 110), inflating said tyre after engagement by said rings, rotating said inflated tyre (112) and buffing away the outer tread wall surfaces to provide a substantially uniform outside tread wall surface on the resulting tyre carcass, and measuring the relative strengths of ultrasonic acoustic signals transmitted through different areas of said buffed tread wall while it is still inflated and as it is rotated thereby non-destructively testing the buffed tyre carcass.

## Revendications

1. Appareil de râpage et de contrôle non destructif d'une carcasse de pneu râpée, caractérisé par des anneaux circulaires opposés (108, 110) propres à attaquer de manière étanche les bourrelets correspondants du pneu, un dispositif de gonflage (102) qui gonfle le pneu après engagement par les anneaux, un dispositif de râpage (200) pour faire tourner le pneu gonflé et pour râper les surfaces de la bande de roulement extérieure de pneu afin de fournir une surface de bande de roulement extérieure en substance uniforme sur la carcasse de pneu résultante, des moyens de contrôle aux ultrasons (210, 500, 502) disposés à l'intérieur et à l'extérieur du pneu gonflé (112) pour mesurer les intensités relatives des signaux acoustiques ultrasoniques transmis à travers différentes zones de la bande de roulement râpée lorsque cette bande de roulement est entraînée en rotation, pour effectuer ainsi un contrôle non destructif de la carcasse de pneu râpée.

2. Appareil suivant la revendication 1, caractérisé en ce que le dispositif de contrôle ultrasonique comprend au moins un transmetteur acoustique ultrasonique et un dispositif de montage de transmetteur réglable (1504, 1502, 1500) monté mécaniquement entre les anneaux pour rétracter le transmetteur radialement vers le centre des anneaux circulaires pendant le montage du pneu entre les anneaux et son démontage d'entre ceux-ci et pour étendre le transmetteur radialement à partir du centre des anneaux circulaires et en direction de la bande de roulement du pneu pendant le contrôle.

3. Appareil suivant la revendication 2, caractérisé en ce que, lorsqu'il se trouve dans sa position radialement rétractée, le dispositif de montage de transmetteur réglable (1504, 1502, 1500) est également déplacé axialement par rapport à au moins un des anneaux (108, 110), de manière à faciliter l'opération de montage du pneu sans endommager le transmetteur.

4. Appareil suivant l'une quelconque des revendications précédentes comprenant, en outre, plusieurs récepteurs acoustiques ultrasoniques (210) disposés en une série épousant d'une manière générale la forme extérieure en coupe du pneu (112) et un dispositif de montage de récepteurs réglable (212) disposé de manière à permettre le retrait automatique des récepteurs radialement à partir des anneaux circulaires pendant le montage du pneu entre les anneaux et son démontage d'entre ceux-ci et pour étendre le récepteur radialement vers les anneaux circulaires pendant un cycle de mesure.

5. Appareil suivant l'une quelconque des revendications précédentes, caractérisé en ce que pendant le contrôle, le transmetteur est disposé approximativement à 5,2±2,5 cm de la surface interne de la paroi du pneu et le récepteur est disposé à approximativement 11,4 à 21,6 cm du transmetteur.

6. Appareil suivant l'une quelconque des revendications précédentes, caractérisé en ce que le dispositif de gonflage gonfle le pneu à une pression d'environ 1,034 à 1,241 bar.

7. Procédé de râpage et de contrôle non destructif d'une carcasse de pneu râpée, caractérisé en ce qu'on utilise un appareil unifié pour engager de manière étanche les bourrelets du pneu (112) entre des anneaux opposés (108, 110), on gonfle le pneu après engagement par les anneaux, on fait tourner le pneu gonflé (112) et on râpe les surfaces extérieures de la bande de roulement pour fournir une surface extérieure en substance uniforme de la bande de roulement de la carcasse résultante du pneu et on mesure les intensités relatives des signaux acoustiques ultrasoniques transmis à travers diverses zones de la bande de roulement râpée, tandis que ce pneu est encore gonflé et est entraîné en rotation de manière à effectuer un contrôle non destructif de la carcasse de pneu râpée.

**Patentansprüche**

1. Vorrichtung zum Anrauhen (oder Abschleifen) der Lauffläche und zum zerstörungsfreien Prüfen einer angerauhten Reifenkarkasse, gekennzeichnet durch einander gegenüberstehende kreisförmige Ringe (108, 110), die unter Abdichtung an den betreffenden Rändern oder Wülsten des Reifens anzugreifen vermögen, eine Reifenaufpumpeinrichtung (102) zum Aufpumpen des Reifens nach dem Einspannen mittels der Ringe, eine Anrauheinrichtung (200) zum Drehen des aufgepumpten Reifens und zum Anrauhen oder Wegschleifen der äußeren Laufflächen oder Profilwandflächen zwecks Gewährleistung einer im wesentlichen gleichmäßigen äußeren Profilwandfläche an der resultierenden Reifenkarkasse, (und) eine sowohl innerhalb als auch außerhalb des aufgepumpten Reifens (112) angeordnete Ultraschall-Prüfeinrichtung (210, 500, 502) zur Messung der relativen Stärken von durch verschiedene Bereich der angerauhten Lauffläche oder Profilflächenwand während deren Drehung übertragenen akustischen Ultraschallsignalen, um damit die angerauhte Reifenkarkasse zerstörungsfrei zu prüfen.

2. Vorrichtung nach Anspruch 1, dadurch gekennzeichnet, daß die Ultraschall-Prüfeinrichtung mindestens einen akustischen Ultraschallsender oder -geber (500, 502) und einstellbare, mechanisch zwischen den Ringen montierte Sender-Halterungsmittel (1504, 1502, 1500) zum Zurückziehen des Senders in Radialrichtung zum Zentrum der kreisförmigen Ringe während des Auf- und Abmontierens des Reifens zwischen den Ringen und radialen Ausfahren des Senders vom Zentrum der kreisförmigen Ringe hinweg und in Richtung auf die Lauffläche bzw. Profilflächenwand des Reifens während des Prüfvorgangs aufweist.

3. Vorrichtung nach Anspruch 2, dadurch gekennzeichnet, daß die einstellbaren Sender-Halterungsmittel (1504, 1502, 1500) dann, wenn sie sich in der radial ausgefahrenen Stellung befinden, auch axial in bezug auf einen der Ringe (108, 110) bewegbar sind, um den Reifen-Aufmontiervorgang zu erleichtern, ohne den Sender zu beschädigen.

4. Vorrichtung nach einem der vorangehenden Ansprüche, gekennzeichnet durch mehrere akustische Ultraschallempfänger (210), die relativ zueinander in einem im wesentlichen der Außen-Querschnittsform des Reifens (112) angepaßten Feld angeordnet sind, und einstellbare Empfänger-Halterungsmittel (212), mit denen beim Auf- und Abmontieren des Reifens zwischen den Ringen die Empfänger radial von den kreisförmigen Ringen hinweg und während eines Meßzyklus die Empfänger radial zu den kreisförmigen Ringen hin vorschiebbar sind.

5. Vorrichtung nach einem der vorangehenden Ansprüche, dadurch gekennzeichnet, daß während des Prüfvorgangs der Sender in einem Abstand von ungefähr 5,2±2,5 cm von der Reifeninnenwandfläche und der Empfänger in einem Abstand von ungefähr 11,4—21,6 cm vom Sender angeordnet sind.

6. Vorrichtung nach einem der vorangehenden Ansprüche, dadurch gekennzeichnet, daß die Reifen-Aufpumpeinrichtung den Reifen auf einen Druck von ungefähr 1,034—1,241 bar aufpumpt.

7. Verfahren zum Anrauhen (oder Abschleifen) der Lauffläche und zum zerstörungsfreien Prüfen einer angerauhten Reifenkarkasse, dadurch gekennzeichnet, daß eine einheitliche Vorrichtung zum abgedichteten Einspannen der Ränder oder Wülste des Reifens (112) zwischen gegenüberstehenden Ringen (108, 110), zum Aufpumpen des Reifens nach dem Einspannen mittels der Ringe, zum Drehen des aufgepumpten Reifens (112) und zum Anrauhen oder Wegschleifen der äußeren Laufflächen oder Profilwandflächen zwecks Gewährleistung einer im wesentlichen gleichmäßigen äußeren Profilwandfläche an der resultierenden Reifenkarkasse verwendet wird und die relativen Stärken von durch verschiedene Bereich der angerauhten Lauffläche oder Profilwandfläche während deren Drehung bei aufgepumptem Reifen übertragenen akustischen Ultraschallsignalen gemessen werden und damit die angerauhte Reifenkarkasse zerstörungsfrei geprüft wird.

Fig.1

*Fig. 2*

OPERATOR INPUTS

TIRE LIFT →

NO 1
MODE
{
ENGAGE CHUCK →
INFLATE TIRE →
EXTEND XMTR →
EXTEND RCVR. →
NDI DRIVE →
}

ELECTRICAL
MOTOR AND
PNEUMATIC
CYLINDER
CONTROLS

300

INFLATION PRESSURE
SET POINT →

BUFFING
MODE
{
ENGAGE CHUCK →
INFLATE TIRE →
BUFFER DRIVE →
}

TIRE
BUFFER/NDI
MACHINE
(Figs. 1+2)

SCAN
REQUEST →

ULTRASONIC
NDI
CIRCUITS

302

DISPLAY ─ 304

Fig. 3

3

FIG. 4

FIG. 5

Fig. 6